# EUROPÄISCHE PATENTSCHRIFT

(11) **EP 0 773 865 B1**
(45) Veröffentlichungstag und Bekanntmachung des Hinweises auf die Patenterteilung: **04.07.2007**
(21) Anmeldenummer: 95927728.6
(22) Anmeldetag: 26.07.1995
(51) Int. Cl.: B29C 70/48, B29C 41/04, B29K 77/00

(54) **VERFAHREN ZUR HERSTELLUNG VON FORMTEILEN MITTELS POLYMERISATION VON LACTAMEN IN FORMEN**
PROCESS FOR PRODUCING MOULDED PARTS BY POLYMERISATION OF LACTAMS IN MOULDS
PROCEDE DE PRODUCTION DE MOULAGES PAR POLYMERISATION DE LACTAMES DANS DES MOULES

(30) Priorität: 01.08.1994 DE 4427206; 28.09.1994 DE 4434657
(43) Veröffentlichungstag der Anmeldung: 21.05.1997
(73) Patentinhaber: Schwartz GmbH, 46509 Xanten/Ndrh. (DE)
(72) Erfinder: NUSSDORFER, Bernd-Klaus, D-47608 Geldern-Walbeck (DE); PEIFFER, Albrecht, D-40667 Meerbusch (DE); TITZSCHKAU, Klaus, D-71543 Wüstenrot (DE)
(74) Vertreter: Stenger, Watzke & Ring
(86) Internationale Anmeldenummer: PCT/EP1995/002955
(87) Internationale Veröffentlichungsnummer: WO 1996/004124

(56) Entgegenhaltungen:
- EP-A- 0 134 992
- EP-A- 0 247 708
- EP-A- 0 547 330
- DE-A- 2 637 683
- GB-A- 2 208 364
- NL-A- 8 400 930
- US-A- 3 349 634

## Beschreibung

Die Erfindung betrifft ein Verfahren zur Herstellung von Formteilen mittels Polymerisation von Lactamen in Formen unter Zusatz von Faserverbundmaterial. Die Erfindung betrifft weiterhin neuartige, nach dem erfindungsgemäßen Verfahren hergestellte Formteile.

Die technische Herstellung von Formteilen aus Lactamen, vorzugsweise durch die aktivierte alkalische Schnellpolymerisation oder Blockpolymerisation wird seit etwa 30 Jahren angewendet. Unter Formteilen sind im Sinne der vorliegenden Erfindung die mittels der bekannten Gieß- und Polymerisationstechniken herstellbaren Elemente, zu denen Halbzeuge, Formelemente und dgl. gehören, zu verstehen.

In den Bereichen Maschinen- und Apparatebau wird beispielsweise seit vielen Jahren versucht, Metallbleche durch andere Werkstoffe zu ersetzen, die technische und/oder finanzielle Vorteile bei der Herstellung und/oder Anwendung bieten. Als alternative Werkstoffe haben sich unter anderem auch Kunststoffe durchgesetzt, die in ihren Eigenschaften sehr vielseitig sind und auf die jeweiligen Anforderungen möglichst genau eingestellt werden. Bis heute ist jedoch kein Kunststoff bereitgestellt worden, der Metalle bezüglich ihrer Festigkeit, Stabilität, Härte, Steifigkeit, Zähigkeit, Temperaturbeständigkeit, in ihrem Brandverhalten u.s.w. vollwertig ersetzen kann. Sofern einzelne Kunststoffe die technologischen Eigenschaften von Metall zumindest teilweise erreichen oder gar übertreffen, ist ihr Einsatz in aller Regel hinsichtlich der Wirtschaftlichkeit nicht mit dem Einsatz von Metallen vergleichbar. Es ist daher immer noch erforderlich, für den jeweiligen Anwendungsfall den jeweils optimalen Ersatz-Kunststoff aus einer großen Palette von möglichen Varianten auszuwählen, um dem Anforderungsprofil am besten gerecht zu werden.

Gebiete für den Einsatz von flächigen Kunststoff-Formteilen sind der Fahrzeugbau und das Transportwesen. Hier werden großflächige Formteile eingesetzt, die ursprünglich aus Metallblechen gebildet wurden. In jüngerer Zeit werden diese Formteile vor allem durch duroplastische Kunststoffe ersetzt, wobei sich insbesondere ungesättigte Polyesterharze (UP-Harze), Polyurethane (PU-Harze) und Epoxidharze (EP-Harze) herausgebildet haben. Bei mechanisch gering belasteten Teilen werden auch zunehmend thermoplastische Kunststoffe eingesetzt, wobei überwiegend die Massenkunststoffe Polypropylen (PP), Polycarbonat (PC), Acrylnitryl-Butadien-Styrole (ABS) sowie unterschiedliche Mischformen Verwendung finden.

Die Vielfalt der verwendeten Kunststoffe, besonders im Fahrzeugbau, wird zunehmend als ein Nachteil gegenüber metallischen Werkstoffen angesehen, da in jüngerer Zeit die Notwendigkeit des Recyclings und der Wiederverwertbarkeit der ausgemusterten Altgeräte entstanden ist. Während die Metallverwertung seit Jahren im wesentlichen durch die Schrottbehandlung gelöst ist, steht das Kunststoffrecycling erst in den Anfängen. Es zeichnet sich bereits jetzt schon ab, daß eine Sortierung nach Kunststofftypen sehr aufwendig und teuer ist. Stattdessen erscheint es sinnvoller, von vornherein nur einige wenige Kunststofftypen einzusetzen. Diese Kunststofftypen sollen dann möglichst umfangreich bei der jeweiligen Anwendung eingesetzt werden, im Automobilbau beispielsweise bei Stoßstangen, bei Seitenteilen, bei Kotflügeln, bei Dächern, bei Unterbodengruppen, bei Motorhauben usw.. Hierbei ist es wünschenswert, nur einen Kunststofftyp für eine große Anzahl von Anwendungen bereitzustellen.

Wichtige Parameter bei der Aufarbeitung von Kunststoffen sind der erforderliche Energieaufwand und der Umarbeitungsgrad der Restkunststoffe zu neuen Kunststoffteilen. Üblicherweise werden Kunststoffteile zerkleinert und von Fremdstoffen gereinigt. Der sich ergebende Rohstoff steht üblicherweise als Granulat zur Verfügung. Handelt es sich um einen thermoplastischen Kunststoff, kann er auf Spritzgießmaschinen wieder vollständig zu neuwertigen Teilen verarbeitet werden. Demgegenüber schmelzen duroplastische Kunststoffe nicht unter vergleichbaren Bedingungen und können daher nur teilweise als Füllstoffe eingesetzt werden, wenn neue duroplastische Teile hergestellt werden. Damit erlangen die Thermoplaste aufgrund der vollständigen Wiederaufarbeitbarkeit gegenüber den Duroplasten eine immer größere Bedeutung, so daß auch die Suche nach geeigneten thermoplastischen Ersatz-Werkstoffen in den Vordergrund rückt.

Ein bekannter thermoplastischer Werkstoff mit einem besonders ausgewogenen Eigenschaftsspektrum ist das Polyamid, welches bereits zur Herstellung hochwertiger technischer Teile eingesetzt wird. Polyamide lassen sich hinsichtlich ihrer technologischen Eigenschaften beeinflussen, so daß sie als Ersatz für Metalle technisch und wirtschaftlich interessant sind. Bei großflächigen, im wesentlichen gegenüber der Flächenausdehnung dünnwandigen Formteilen ist dies bisher jedoch nicht möglich. Insbesondere bei tragenden Teilen dominieren hier neben duroplastischen Elementen noch Bleche, die starke mechanische Kräfte aushalten müssen ohne zu zerbrechen.

Formteile aus Polyamid werden unter anderem mittels Polymerisation von Lactamen in Formen hergestellt. Die technische Herstellung von Formteilen aus Lactamen, vorzugsweise durch die aktivierte alkalische Schnellpolymerisation oder Blockpolymerisation, wird seit etwa 30 Jahren angewendet. Unter flächigen Formteilen sind im Sinne der vorliegenden Erfindung die üblicherweise aus Folien, Blechen, oder sonstigen flächig gestaltbaren Werkstoffen hergestellte Formteile, die üblicherweise eine großflächige Ausdehnung und eine relativ hierzu geringe Dicke aufweisen.

Allgemein werden Formteile aus Lactamen durch die Polymerisation von Lactamen in Gießformen hergestellt und sind gegenüber herkömmlichen Kunststoffelementen beispielsweise auch aus Polyamid im allgemeinen härter, steifer und abriebfester. Dies liegt in erster Linie an der höheren Kristallinität. Durch die Festlegung der verfahrensseitigen Randbedingungen wie Temperatur, Verweilzeit usw., sowie durch die Wahl der zu verwendenden Additive und der Nachbehandlung können die jeweiligen technologischen Eigenschaften der Formteile beeinflußt werden. Die meisten dieser genannten Bedingungen sind allerdings nur mit sehr großem wirtschaftlichen und technischen Aufwand einhaltbar. Die hohe Kristallinität bewirkt vor allem, daß die aus Lactamen hergestellten Formteile auch eine hohe Sprödigkeit aufweisen. So können die aus Lactamen in herkömmlichen Verfahren hergestellten Formteile durch plötzlich auftretende Überlasten durch einen explosionsartigen Bruch aufgrund eines sogenannten Kaltflusses zerstört werden. Für sicherheitsrelevante Bauelemente kann dies zu erheblichen Schäden führen.

Wenngleich im Stand der Technik der Einsatz auch von glasfaserverstärkten in Formen gehärteten Monomeren in Form sogenannter Duroplaste bekannt ist, sind die hieraus bekannten Verfahren für den Fachmann nicht ohne weiteres übertragbar. Duroplaste, also Glasfaserkunststoffe im herkömmlichen Sinne, werden unter einer radikalischen Polymerisation erzeugt. Bei der Herstellung von Formteilen mittels Polymerisation von Lactamen handelt es sich um die Herstellung von Thermoplasten, die unter einer anionischen Polymerisation entstehen. Hier gibt es Randbedingungen, die bei der radikalischen Polymerisation überhaupt nicht beachtlich sind. Aus diesem Grunde können die Übertragungen von Verfahrenserkenntnissen aus der Duroplast-Herstellung nicht zwangsläufig zum Erfolg bei der Thermoplast-Herstellung durch Lactam-Polymerisation führen, sondern die anionische Polymerisation unterliegt eigenen Gesetzen. Die Gesetze für die Duroplastik-Herstellung sind nicht übertragbar.

Besondere Probleme bei der anionischen Polymerisation von Lactamen ergeben sich beispielsweise aus den die Feuchtigkeit betreffenden Verfahrensparametern und die Empfindlichkeit der Lactame gegenüber polaren Substanzen. So können auch nicht einfach herkömmliche Glasfaserkunststoffe in die Lactame eingebettet werden, sondern diese müssen verfahrensparameterabhängig bestimmten Kriterien genügen.

Verfahren zur Herstellung von Formteilen mittels Polymerisation von Lactamen sind beispielsweise in der DE 1 174 982 A1 und der DE 1 910 175 A1 offenbart. Die erstgenannte offenbart ein Verfahren zur Herstellung von Guß-Polyamid-Formkörpern, die im Rotationsguß hergestellt werden, wobei die Rotationskräfte die Gravitationskräfte nicht überschreiten dürfen. Zwar wird die grundsätzliche Möglichkeit der Füllstoffeinbringung offenbart, jedoch wird nicht erkannt, durch welche Maßnahmen definierte technologische Eigenschaften erzielbar werden. Die DE 1 910 175 A1 offenbart ebenfalls ein Verfahren zur Herstellung von Polyamid-Guß-Formteilen, wobei Matten zur Erhöhung der Steifigkeit dünnwandiger Formteile eingesetzt werden. Hinweise auf den gezielten Einsatz von Fasern oder den Ersatz einer bestimmten Art von Fasern werden nicht gegeben.

In den DE 2 050 572 A1, DE 1 214 865 A1 und DE 1 066 012 A1 werden Rotations- und Schleudergußverfahren beschrieben, die zwar Verfahrensdetails offenbaren, aber keinerlei Zusammenhang mit der Erstellung gezielt faserverstärkter Formteile herstellen.

Davon ausgehend liegt der vorliegenden Erfindung die **Aufgabe** zugrunde, ein Verfahren zur Herstellung von Formteilen mittels Polymerisation von Lactamen in Formen dahingehend zu verbessern, daß die Widerstandsfähigkeit der verfahrensgemäß hergestellten Formteile gegen plötzlich auftretende Lastspitzen vergrößert und die Reproduzierbarkeit der definierbaren technologischen Eigenschaften der verfahrensgemäß hergestellten Formteile verbessert werden.

Zur technischen **Lösung** dieser Aufgabe wird ein Verfahren zur Herstellung von im wesentlichen flächigen Formteilen mittels Polymerisation von Lactamen in Formen unter Zusatz von Faserverbundmaterial nach Anspruch 1 vorgeschlagen.

Nach dem erfindungsgemäßen Verfahren wird ermöglicht, durch die gezielte Einbringung von Faserverbundmaterial die Reproduzierbarkeit der technologischen Eigenschaften des Formteilmaterials zu verbessern. Hierzu gehören beispielsweise Zugfestigkeit, E-Modul, Schlagzähigkeit und dergleichen. Unter Faserverbundmaterial sollen im Sinne der Erfindung neben Rovings, Geweben und Matten auch Fliese und Filze verstanden werden, d.h. gemäß vorteilhaften Ausgestaltungen der Erfindung Nadelfliese bzw. -filze, Gewebe, Rovings, Rovinggewebe und Matten, vorzugsweise aus Glasfasern, bzw. Kunstfasern.

Wesentlich ist die Berücksichtigung der Verträglichkeit des Werkstoffes (Matrix) mit dem Gewebe, woraus sich die technologischen Eigenschaften ergeben. So ist es von Bedeutung, daß die Fasern frei von inhibierenden Stoffen sind.

Das Faserverbundmaterial wird gemäß einem Vorschlag der Erfindung ortsfest in die Form eingelegt, so daß sich der geometrische Ort des Faserverbundmaterials im Werkstück sicherstellen läßt. In vorteilhafter Weise wird die Form mit dem eingelegten Gewebe auf eine Temperatur von 120°C - 190°C, vorzugsweise 145°C bis 180°C gebracht. Gemäß einem Vorschlag der Erfindung werden die Lactame nach dem Einlegen des Faserverbundmaterials in die Form eingegossen. Dabei ist es von Vorteil, wenn die Lactame mit den erforderlichen Additiven vor dem Eingießen in die Form aufgeschmolzen werden, wobei in vorteilhafter Weise eine Temperatur von 110°C - 140°C, vorzugsweise 116°C bis 125°C eingestellt wird.

Gemäß einer vorteilhaften Ausgestaltung der Erfindung wird die Form nach dem Eingießen der Lactame geschlossen und evakuiert. Zusätzlich oder alternativ kann gemäß einem Vorschlag der Erfindung die Form während und/oder nach dem Eingießen der Lactame rotieren. Dabei werden in vorteilhafter Weise Rotationsgeschwindigkeiten von 30 bis 250 U/min (Umdrehungen pro Minute) eingestellt. Bei diesen Geschwindigkeiten kann die Form auch biaxial rotiert werden, was für die Hohlkörperherstellung vorteilhaft ist. Dieses Verfahren ermöglicht das etappenweise Eingießen der Lactame, so daß nacheinander Einzelgüsse in Abhängigkeit von der Viskosität der Schmelze durchgeführt werden können. Dieses Verfahren ermöglicht auch das nachträgliche Einlegen von Faserverbundmaterial, sofern die erforderlichen Verfahrensparameter hinsichtlich der Lactamschmelze aufrechterhalten werden, so daß es nicht zu einer vollständigen Polymerisation kommen kann.

Gemäß einem weiteren vorteilhaften Vorschlag der Erfindung werden Umdrehungsgeschwindigkeiten zwischen 100 und 2000 U/min eingestellt. Der Einguß in die rotierende Form erfolgt im Drehzentrum. Alle genannten Verfahren stellen sicher, daß Lufteinschlüsse in den hergestellten Formteilen vermieden werden und ein guter Verbund zwischen Gießmasse und Faserverbundmaterial hergestellt wird.

Gemäß einer vorteilhaften Ausgestaltung der Erfindung ist Glas in einer möglichst großen Menge einzusetzen. Damit geht eine Erhöhung insbesondere der Festigkeitswerte einher. Hierbei ist besonders darauf zu achten, daß das polymerisierte Polyamid möglichst fest an der Oberfläche des Glases haftet, daß möglichst wenig Lufteinschlüsse im fertigen Teil verbleiben und vor allem, daß die Polymerisation vollständig bis zu einem Rest-Lactam-Gehalt von maximal 2 % abläuft.

Insbesondere werden gemäß der Erfindung vorwiegend Glasfasergewebe eingesetzt. Diese haben den Vorteil eines geringen Volumens, wodurch weniger Luft in die Formen eingebracht wird. Darüber hinaus lassen sich durch Schichtungen höhe Glasanteile erreichen. Die Gewebe können sich auch hinsichtlich der erforderlichen Belastungsrichtungen in unterschiedliche Faserrichtungen ablegen, um somit einen Verbund zu erhalten, der den unterschiedlichsten statischen und dynamischen Ansprüchen genügen kann. Die Verwendung von Glasfasergeweben ermöglicht darüber hinaus die Herstellung dünnwandiger Elemente.

Gemäß einem Vorschlag der Erfindung werden die Glasfasergewebe in die bereits heiße Form eingelegt und die Form wird nachgeheizt. Durch diese Maßnahme kann eine im Gewebe vorhandene Feuchte entfernt werden. Hierzu kann bei geschlossener Form zusätzlich Stickstoff durch das Gewebe hindurchgeleitet werden. Auch besteht die Möglichkeit, die geschlossene Form zu evakuieren. In erster Linie wird mit diesen Maßnahmen Feuchtigkeit vermieden, welche die Polymerisation der Lactame behindern oder gar unterdrücken kann, so daß ein Rest-Lactam-Gehalt von über 2 % entstehen würde.

Gemäß der Erfindung wird Glasfasermaterial verwendet, welches keine ionischen Substanzen an der Oberfläche aufweist. Weiterhin wird vorgeschlagen, die Evakuierung der Form so durchzuführen, daß Lufteinschlüsse in dem Fertigteil verhindert werden. Hier besteht einerseits die Möglichkeit, ein Vakuum nach dem Eingießen der Lactame und dem Schließen der Form zu erzeugen. Auch besteht die Möglichkeit, die Lactame in die evakuierte Form mittels Düsen einzuspritzen.

Gemäß der Erfindung wird die Form während des Polymerisationsvorganges unter Druck gesetzt. Hierzu kann die Form in eine Presse eingesetzt werden. Durch diese Maßnahmen können besonders spannungsarme Formteile hergestellt werden. Gemäß einem weiteren Vorschlag der Erfindung können den Lactamen Additive beigefügt werden, um die gewünschten technologischen Eigenschaften zu beeinflussen. Üblicherweise werden bestimmte reaktive Prepolymere verwendet, durch welche sich im hochkristallinen Guß-Polyamid gezielt der armorphe Anteil erhöhen läßt, wodurch die Sprödigkeit ab- und die Zähigkeit zunimmt. Gemäß einem weiteren Vorschlag der Erfindung werden die Additive unter dem Gesichtspunkt der Regeneration des Werkstoffes als thermoplastischer Kunststoff ausgewählt. Selbstverständlich sollen keine Additive eingesetzt werde, die eine anionische Polymerisation behindern können.

Mit dem erfindungsgemäßen Verfahren lassen sich flächige Formteile herstellen, die bei wirtschaftlicher Herstellung annähernd die technologischen Eigenschaften von aus Metall hergestellten flächigen Formteilen erreichen können. Weiterhin erreichen die nach dem erfindungsgemäßen Verfahren hergestellten Formteile auch die technologischen Eigenschaften von Formteilen aus duroplastischen Kunststoffen, sind demgegenüber jedoch einfach und vor allem vollständig wiederverwertbar.

Mit dem erfindungsgemäßen Verfahren lassen sich darüber hinaus Formteile mit reproduzierbaren technologischen Eigenschaften herstellen, wobei grundsätzlich die Widerstandsfähigkeit gegen plötzlich auftretende Lastspitzen erhöht ist. Die beispielsweise mechanischen Eigenschaften lassen sich durch die Art des Faserverbundmaterials, die Art der Ablage hinsichtlich Lagenzahl. Faserrichtung und dgl. beeinflussen.

Ein nach dem erfindungsgemäßen Verfahren hergestelltes Formteil ist hinsichtlich seines Aufbaus und seiner technologischen Eigenschaften neu. Überraschend ist insbesondere die Bestimmbarkeit und Reproduzierbarkeit der technologischen Eigenschaften.

Weitere Vorteile und Merkmale der Erfindung ergeben sich aus der folgenden Beschreibung anhand von Ausführungsbeispielen des erfindungsgemäßen Verfahrens sowie anhand der Figuren. Dabei zeigen:
- Fig. 1: ein schematisches Flußdiagramm zur Erläuterung des Verfahrensablaufes;
- Fig. 2: eine schematische Schnittdarstellung eines Ausführungsbeispiels für ein Formbauteil, und
- Fig. 3: eine schematische Darstellung einer Anordnung zur Durchführung des Verfahrens.

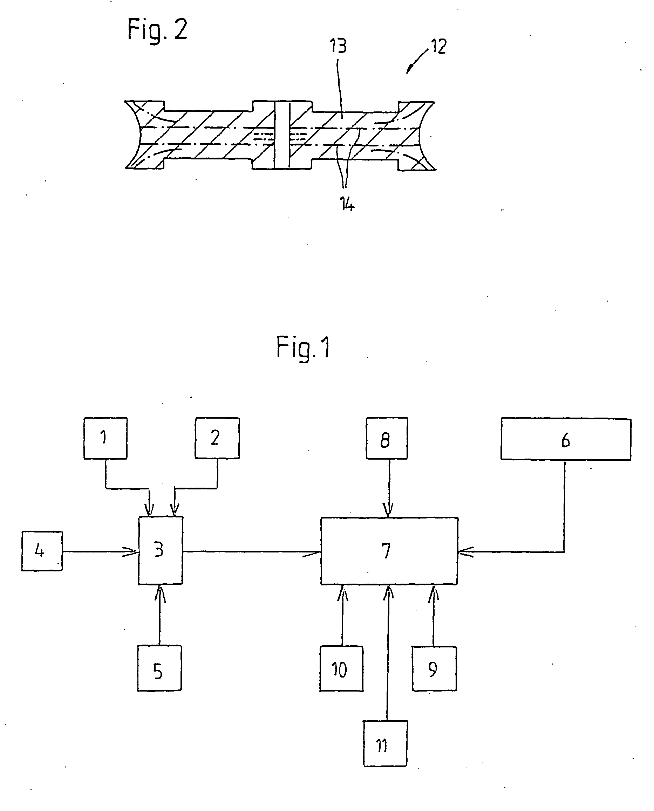

Die Ausführungsbeispiele werden anhand des in Fig 1. gezeigten schematischen Flußdiagrammes erläutert.

Zunächst werden in den Schritten 1 und 2 die Lactame und die erforderlichen Additive in den vorgesehenen Mengen bereitgestellt und spezifiziert. Unter Spezifikation ist die quantitative und qualitative Zuordnung der einzelnen Rohstoffe zueinander zu verstehen, die, unter anderem abhängig von technologischem Know-how, eine erfolgreiche Verfahrensdurchführung beeinflussen. Beispielsweise kann eine genaue Spezifikation den Anteil an extrahierbaren Bestandteilen des Werkstoffs, also Mono- und Oligomere, unter 2% halten, so daß die technologischen Eigenschaften nicht nachhaltig verschlechtert werden.

Im Verfahrensschritt 6 wird das Faserverbundmaterial in entsprechenden Mengen, Zuschnitten und Spezifikationen bereitgestellt. Je nach gewünschter technologischer Eigenschaft kann das Faserverbundmaterial ausgewählt werden.

Beispielsweise können Rovingglasgewebe, Textilglasmatten, Glasnadelfilze oder Glasnadelfliese eingebracht werden. Bei der Anwendung von Rovingglasgeweben ist auf einen homogenen Verbund zwischen Matrix und Faser zu achten. Die Knotenpunkte der Textilglasmatten können mit geeigneten duroplastischen Klebern verbunden sein. Die schaumartige Struktur von Filzen und Fliesen unterstützt die signifikante Erhöhung der Schlagabsorptionsfähigkeiten beim hergestellten Werkstück.

Im Verfahrensschritt 3 werden die Lactame und die Additive gemischt und eingeschmolzen. Eine Temperatursteuerung 4 und eine Zeitsteuerung 5 sorgen für die Erzeugung einer wunschgemäßen Schmelze mit definierten Eigenschaften und einem definierten, verfahrensspezifischen Verhalten.

Die im Verfahrensschritt 6 bereitgestellten Faserverbundmaterialien werden in die Form 7 eingebracht. Eine Temperatursteuerung 8 sorgt für die Einhaltung der gewünschten Temperaturen. In Abhängigkeit von den Zeitsteuerungen 9 und 10 erfolgt der Einguß der Lactamschmelze und in Abhängigkeit von der Verfahrenssteuerung 11 die anschließende Polymerisation.

Zur Verfahrenssteuerung gehört beispielsweise das Schließen und Evakuieren der Form nach erfolgtem Einguß, das Drehen der Form zur Erzeugung eines Schleudergusses, wobei Drehlzahlen zwischen 100 und 2000 U/min vorteilhaft sind. Der Einguß erfolgt im Drehzentrum. Bei einem Rotationsguß, z.B Biaxial-Guß, wird eine Rotationsgeschwindigkeit zwischen 30 und 250 U/min eingestellt. Dieses Verfahren ermöglicht ein etappenweises Eingießen in Abhängigkeit von dem Anstieg der Viskosität der Schmelze in der Form.

Nach erfolgter Polymerisation läßt sich das fertige Werkstück in der Regel einfach der Form entnehmen.

Nach der Entnahme können durch die Lagerung der Werkstücke in einer definierten Atmosphäre, beispielsweise in einer beheizten oder luftaustauschfreien Atmosphäre, erwünschte Nachkristallisationseffekte erzielt werden.

Die Form kann vorzugsweise aus Edelstahl gefertigt sein. Trennmittel sind nicht erforderlich.

Wie die Figur 2 am Beispiel einer Seilrolle zeigt, lassen sich durch die ortsfeste Fixierung des Faserverbundmaterials in der Form definierte Ablagen des Faserverbundmaterials in dem Formteil bewirken, so daß definierte technologische Eigenschaften die Folge sind. Das erhaltene Formteil 12 besteht dann aus dem Lactamkörper 13, in welchem das Faserverbundmaterial, im gezeigten Ausführungsbeispiel Fasermatten 14, in definierter Weise eingelegt sind.

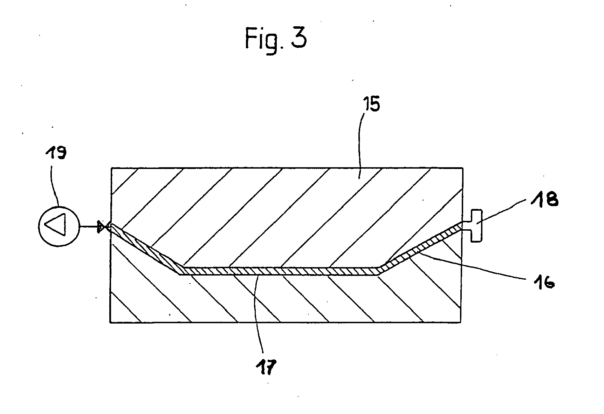

In der in Figur 3 schematisch dargestellten Form 15 ist der Hohlraum 16 zur Herstellung eines großflächigen Formbauteils ausgebildet. Im gezeigten Ausführungsbeispiel ist in den Hohlraum 16 ein Faserverbundmaterial 17, beispielsweise eine Glasgewebe eingelegt. An den Hohlraum 16 ist ein Mischkopf 18 angeschlossen, so daß im gezeigten Ausführungsbeispiel im sogenannten Injektionsverfahren die Lactamschmelze zugeführt werden kann. Ebenfalls ist an den Hohlraum 16 eine Vakuumpumpe 19 angeschlossen, welche im Hohlraum 16 einen Unterdruck erzeugt, so daß die Schmelze über den Mischkopf 18 in den Hohlraum 16 eingesaugt wird. Das in den Hohlraum 16 eingelegte Faserverbundmaterial wird somit in die Schmelze vor der Polymerisation eingebettet.

### Bezugszeichenliste

- 1: Lactame (Spezifikation)
- 2: Additive (Spezifikation)
- 3: Mischung
- 4: Temperatursteuerung
- 5: Zeitsteuerung
- 6: Faserverbundmaterial (Spezifikation)
- 7: Form
- 8: Temperatursteuerung
- 9: Zeitsteuerung
- 10: Zeitsteuerung
- 11: Verfahrenssteuerung
- 12: Formteil
- 13: Lactam-Körper
- 14: Fasermatten
- 15: Form
- 16: Hohlraum
- 17: Faserverbundmaterial
- 18: Mischkopf
- 19: Vakuumpumpe

## Patentansprüche

1. Verfahren zur Herstellung von im wesentichen flächigen Formteilen mittels Polymerisation von Lactamen in Formen unter Zusatz von Faserverbundmaterial, wobei
das Faserverbundmaterial großflächig vor dem Polymerisationsvorgang in eine im wesentlichen große, ebene Flächen aufweisende Form zur Einbettung in das Formteil eingebracht und relativ zur Form ortsfest positioniert wird,
**dadurch gekennzeichnet,**
**daß** zur Polymerisation Lactame eingegossen werden, wobei die Form nach dem Schließen unter Druck gesetzt wird und die Polymerisation vollständig bis zu einem Rest-Lactam-Gehalt von maximal 2 % abläuft, und
Glasfasern ohne ionische Substanzen an der Oberfläche verwendet werden.

2. Verfahren nach Anspruch. 1, **dadurch gekennzeichnet, daß** die Form mit dem eingelegten Faserverbundmaterial auf eine Temperatur von 120°C bis 190°C erwärmt wird.

3. Verfahren nach Anspruch. 2, **dadurch gekennzeichnet, daß** die Form mit dem eingelegten Faserverbundmaterial vorzugsweise auf eine Temperatur von 145°C bis 180°C erwärmt wird.

4. Verfahren nach einem der vorhergehenden Ansprüche, **dadurch gekennzeichnet, daß** ein Glasanteil von 10 bis 70 % eingestellt wird.

5. Verfahren nach einem der vorhergehenden Ansprüche, **dadurch gekennzeichnet, daß** als Faserverbundmaterial Nadelflies bzw. -filz verwendet wird.

6. Verfahren nach einem der Ansprüche 1 bis 4, **dadurch gekennzeichnet, daß** als Faserverbundmaterial Rovings verwendet werden.

7. Verfahren nach einem der vorhergehenden Ansprüche, **dadurch gekennzeichnet, daß** als Faserverbundmaterial Gewebe verwendet werden.

8. Verfahren nach einem der vorhergehenden Ansprüche, **dadurch gekennzeichnet, daß** als Faserverbundmaterial Matten verwendet werden.

9. Verfahren nach einem der vorhergehenden Ansprüche, **dadurch gekennzeichnet, daß** die Lactame zusammen mit den Additiven vor dem Eingießen in die Form aufgeschmolzen werden.

10. Verfahren nach Anspruch 9. **dadurch gekennzeichnet, daß** die Schmelze auf eine Temperatur von 110°C bis 140°C gebracht wird.

11. Verfahren nach Anspruch 9, **dadurch gekennzeichnet, daß** die Schmelze vorzugsweise auf eine Temperatur von 116°C bis 125°C gebracht wird.

12. Verfahren nach einem der vorhergehenden Ansprüche, **dadurch gekennzeichnet, daß** die Form nach dem Einlegen der Fasern nachgeheizt wird.

13. Verfahren nach einem der vorhergehenden Ansprüche, **dadurch gekennzeichnet, daß** durch die geschlossene Form Stickstoff hindurchgeleitet wird.

14. Verfahren nach einem der vorhergehenden Ansprüche, **dadurch gekennzeichnet, daß** die Lactamschmelze in die geschlossene Form eingespritzt wird.

15. Verfahren nach einem der vorhergehenden Ansprüche, **dadurch gekennzeichnet, daß** die Form nach dem Eingießen der Schmelze geschlossen und evakuiert wird.

16. Verfahren nach einem der vorhergehenden Ansprüche, **dadurch gekennzeichnet, daß** die Form nach dem Eingießen rotiert wird.

17. Verfahren nach Anspruch 16, **dadurch gekennzeichnet, daß** die Form mit einer Geschwindigkeit von 30 bis 250 U/min rotiert wird.

18. Verfahren nach einem der Ansprüche 16 oder 17, **dadurch gekennzeichnet, daß** das Eingießen der Schmelze etappenweise erfolgt.

19. Verfahren nach einem der Ansprüche 16 bis 18, **dadurch gekennzeichnet, daß** die Form mit einer Geschwindigkeit von bis zu 2000 U/min rotiert wird.

20. Verfahren nach einem der Ansprüche 16 bis 19, **dadurch gekennzeichnet, daß** der Einguß der Schmelze im Drehzentrum erfolgt.

## Claims

1. Method of producing substantially flat moulded parts by means of polymerisation of lactams in moulds, wherein before the polymerisation operation the composite fibre material is introduced with a large surface area into a mould having substantially large flat surfaces for embedding in the moulded and is positioned so as to be stationary relative to the mould, **characterised in that** for polymerisation lactams are poured in, wherein the mould is pressurised after being closed and the polymerisation proceeds completely to a maximum residual lactam content of 2%, and glass fibres with no ionic substances on the surface are used.

2. Method as claimed in Claim 1, **characterised in that** the mould with the inlaid composite fibre material is heated to a temperature of 120 °C to 190 °C.

3. Method as claimed in Claim 2, **characterised in that** the mould with the inlaid composite fibre material is preferably heated to a temperature of 145 °C to 180 °C.

4. Method as claimed in any one of the preceding claims, **characterised in that** the proportion of glass is set at from 10 to 70%.

5. Method as claimed in any one of the preceding claims, **characterised in that** needled non-woven fabric or needled felt is used as the composite fibre material.

6. Method as claimed in any one of Claims 1 to 4, **characterised in that** rovings are used as the composite fibre material.

7. Method as claimed in any one of the preceding claims, **characterised in that** woven fabric is used as the composite fibre material.

8. Method as claimed in any one of the preceding claims, **characterised in that** mats are used as the composite fibre material.

9. Method as claimed in any one of the preceding claims, **characterised in that** the lactams together with the additives are melted before being poured into the mould.

10. Method as claimed in Claim 9, **characterised in that** the melt is heated to a temperature of 110°C to 140 °C.

11. Method as claimed in Claim 9, **characterised in that** the melt is heated to a temperature of 116 °C to 125 °C.

12. Method as claimed in any one of the preceding claims, **characterised in that** the mould is reheated after the inlaying of the fibres.

13. Method as claimed in any one of the preceding claims, **characterised in that** nitrogen is passed through the closed mould.

14. Method as claimed in any one of the preceding claims, **characterised in that** the lactam melt is injected into the closed mould.

15. Method as claimed in any one of the preceding claims, **characterised in that** the mould is closed and evacuated after the melt is poured in.

16. Method as claimed in any one of the preceding claims, **characterised in that** the mould is rotated after the melt is poured in.

17. Method as claimed in Claim 16, **characterised in that** the mould is rotated at a speed of 30 to 250 rpm.

18. Method as claimed in any one of Claims 16 or 17, **characterised in that** the pouring in of the melt takes place in stages.

19. Method as claimed in any one of Claims 16 to 18, **characterised in that** the mould is rotated at a speed of up to 2000 rpm.

20. Method as claimed in any one of Claims 16 to 19, **characterised in that** the pouring in of the melt takes place in the centre of rotation.

## Revendications

1. Procédé de fabrication de pièces moulées de surfaces sensiblement grandes, par polymérisation de lactames dans des moules, en ajoutant un matériau composite fibreux, dans lequel
le matériau composite fibreux est introduit en grande surface avant le procédé de polymérisation dans un moule présentant des surfaces planes sensiblement grandes pour l'incorporation dans la pièce moulée et est positionné de manière fixe par rapport au moule,
**caractérisé en ce que**
les lactames sont versés pour la polymérisation, où le moule est placé sous pression après sa fermeture et la polymérisation se déroule entièrement jusqu'à une teneur en lactame résiduelle d'au maximum 2 % et
on utilise des fibres de verre sans substances ioniques à la surface.

2. Procédé selon la revendication 1, **caractérisé en ce que** le moule avec le matériau composite fibreux introduit est chauffé à une température de 120°C jusqu'à 190°C.

3. Procédé selon la revendication 2, **caractérisé en ce que** le moule avec le matériau composite fibreux introduit est chauffé à une température de 145°C à 180°C.

4. Procédé selon l'une des revendications précédentes, **caractérisé en ce que** l'on ajuste une proportion de verre à une valeur allant de 10 à 70 %.

5. Procédé selon l'une des revendications précédentes, **caractérisé en ce que** l'on utilise un voile ou feutre aiguilleté à titre de matériau composite fibreux.

6. Procédé selon l'une des revendications 1 à 4, **caractérisé en ce que** l'on utilise des stratifils de verre textile à titre de matériau composite fibreux.

7. Procédé selon l'une des revendications précédentes, **caractérisé en ce que** l'on utilise du tissu à titre de matériau composite fibreux.

8. Procédé selon l'une des revendications précédentes, **caractérisé en ce que** l'on utilise des nattes à titre de matériau composite fibreux.

9. Procédé selon l'une des revendications précédentes, **caractérisé en ce que** les lactames sont fondus avec les additifs avant de les verser dans le moule.

10. Procédé selon la revendication 9, **caractérisé en ce que** la matière fondue est portée à une température de 110°C à 140°C.

11. Procédé selon la revendication 9, **caractérisé en ce que** la matière fondue est portée de préférence à une température de 116°C à 125°C.

12. Procédé selon l'une des revendications précédentes, **caractérisé en ce que** le moule est chauffé de nouveau après l'introduction des fibres.

13. Procédé selon l'une des revendications précédentes, **caractérisé en ce que** de l'azote est conduit à travers le moule fermé.

14. Procédé selon l'une des revendications précédentes, **caractérisé en ce que** le lactame fondu est injecté dans le moule fermé.

15. Procédé selon l'une des revendications précédentes, **caractérisé en ce que** le moule est fermé après le versement de la matière fondue et est mis sous vide.

16. Procédé selon l'une des revendications précédentes, **caractérisé en ce que** l'on fait tourner le moule après l'avoir rempli.

17. Procédé selon la revendication 16, **caractérisé en ce que** l'on fait tourner le moule à une vitesse de 30 à 250 t/min.

18. Procédé selon l'une des revendications 16 ou 17, **caractérisé en ce que** le versement de la matière fondue s'effectue par étapes.

19. Procédé selon l'une des revendications 16 à 18, **caractérisé en ce que** l'on fait tourner le moule à une vitesse allant jusqu'à 2000 t/min.

20. Procédé selon l'une des revendications 16 à 19, **caractérisé en ce que** le versement de la matière fondue s'effectue dans le centre de rotation.
